# EUROPEAN PATENT APPLICATION

(11) **EP 2 141 840 A1**
(43) Date of publication of application: **06.01.2010**
(21) Application number: 08720670.2
(22) Date of filing: 28.03.2008
(51) Int. Cl.: H04J 11/00, H04L 7/00

(54) **RECEPTION DEVICE AND RECEPTION METHOD**

(30) Priority: 28.03.2007 JP 2007083755
(71) Applicant: Panasonic Corporation, Kadoma-shi Osaka 571-8501 (JP)
(72) Inventor: HAYASHI, Takaya c/o Panasonic Corp., IPROC, Chuo-ku, Osaka-shi, Osaka 540-6207 (JP)
(74) Representative: Grünecker, Kinkeldey, Stockmair & Schwanhäusser Anwaltssozietät
(86) International application number: PCT/JP2008/000803
(87) International publication number: WO 2008/126379

(57) **Abstract**

Quick resumption of reproduction of received data is achieved with low cost. A receiver for receiving an OFDM signal has a demodulation unit and a transmission mode control unit. The demodulation unit performs, on a received signal, demodulation and detection of establishment of synchronization in accordance with a transmission mode that is a combination of an FFT mode and a guard interval, and outputs a synchronization establishment signal indicating an obtained result of the detection of establishment of synchronization. The transmission mode control unit holds an FFT mode and a guard interval adopted when the synchronization establishment signal indicates establishment of synchronization, and outputs a combination of the held FFT mode and the held guard interval as the transmission mode to be used in the demodulation unit.

## Description

### TECHNICAL FIELD

The present invention relates to an apparatus and method for receiving a signal that is transmitted using an OFDM (Orthogonal Frequency Division Multiplexing) transmission technique.

### BACKGROUND ART

OFDM has been used as a transmission technique for digital terrestrial television broadcasting in Japan and Europe. For example, in the standard for digital terrestrial television broadcasting in Japan, Mode 1 (effective symbol length: 252 µsec), Mode 2 (effective symbol length: 504 µsec), and Mode 3 (effective symbol length: 1008 µsec) are defined as modes (FFT (Fast Fourier Transform) modes) corresponding to effective symbol lengths of a transmission signal. Also, a guard period is provided in a transmission signal so as to reduce the influence of multipath interference. As the length (guard interval), 1/32, 1/16, 1/8 and 1/4 of the effective symbol length are defined. An FFT mode and a guard interval are selected from those described above on a transmitter side, while an FFT mode and a guard interval are expected to be automatically detected on a receiver side.

Examples of a receiver in which an FFT mode and a guard interval can be automatically detected are disclosed in Patent Document 1 and Patent Document 2. In the receiver of Patent Document 1, when a channel is selected, an appropriate one is searched for from a plurality of combinations of an FFT mode and a guard interval. Specifically, in this receiver, one is sequentially selected from these combinations, a correlation is calculated with respect to a guard interval portion of a received signal using the selected combination, and when the amplitude of the resultant correlation signal is larger than or equal to a predetermined level, the selected combination is recognized as the FFT mode and guard interval of the received signal and a demodulation process is performed.

Also, in the receiver of Patent Document 2, mode history information is stored for each channel, and using the history information, combinations of an FFT mode and a guard interval are ranked, depending on an FFT mode and a guard interval of the last selected channel and the frequency of use of an FFT mode and a guard interval. In this receiver, FFT modes and guard intervals are sequentially switched in order of rank so as to determine whether or not they are equal to the FFT mode and guard interval of a received signal, thereby estimating the FFT mode and guard interval of the received signal when reception channels are switched.
Patent Document 1: Japanese Patent No. 2879034
Patent Document 2: Japanese Unexamined Patent Application Publication No. 2001-136146

### DISCLOSURE OF THE INVENTION

### PROBLEMS TO BE SOLVED BY THE INVENTION

When a receiver is being passed through a tunnel or the like, a received signal is temporarily interrupted, and after being passed through the tunnel, the signal is received again. For example, in the receiver of Patent Document 1, the operation of searching for an FFT mode and a guard interval may be started in a situation in which a received signal is temporarily interrupted, such as when the receiver is carried on a car and is being passed through a tunnel, or the like. In this case, when the signal is input to the receiver again after the car exits the tunnel, then if a currently selected combination of an FFT mode and a guard interval are not equal to a combination of an FFT mode and a guard interval of the received signal, an appropriate demodulation process cannot be performed with respect to the received signal. Therefore, a demodulation process is delayed until an equal combination is selected. This means that reproduction of received data may be delayed after the car exits the tunnel.

In the receiver of Patent Document 2, combinations of an FFT mode and a guard interval and history information about these combinations need to be stored for each channel, and a memory for storing them and a control of the memory are required. This leads to an increase in apparatus cost and an increase in load of design of control software or the like.

An object of the present invention is to quickly resume reproduction of received data with low cost when a received signal is input again after being temporarily interrupted.

### SOLUTION TO THE PROBLEMS

A receiver according to the present invention is a receiver for receiving an OFDM (Orthogonal Frequency Division Multiplexing) signal, including a demodulation unit and a transmission mode control unit. The demodulation unit performs, on a received signal, demodulation and detection of establishment of synchronization in accordance with a transmission mode that is a combination of an FFT (Fast Fourier Transform) mode and a guard interval, and outputs a synchronization establishment signal indicating an obtained result of the detection of establishment of synchronization. The transmission mode control unit holds an FFT mode and a guard interval adopted when the synchronization establishment signal indicates establishment of synchronization, and outputs a combination of the held FFT mode and the held guard interval, as the transmission mode to be used in the demodulation unit.

Therefore, since an FFT mode and a guard interval are held and used, when a received signal is temporarily interrupted, reproduction of received data can be quickly resumed.

### EFFECT OF THE INVENTION

According to the present invention, when a received signal is temporarily interrupted (e.g., traveling in a tunnel), and subsequently, the signal is input again, reproduction of received data can be quickly resumed. Since this is achieved by a simple configuration, the cost can be low.

### BRIEF DESCRIPTION OF THE DRAWINGS

[FIG. 1] FIG. 1 is a block diagram showing an example configuration of a receiver according to a first embodiment of the present invention.
[FIG. 2] FIG. 2 is a block diagram showing an example configuration of a receiver according to a second embodiment of the present invention.

### DESCRIPTION OF THE REFERENCE CHARACTERS

- 4: transmission mode estimating unit
- 5, 205: transmission mode control unit
- 6: OFDM demodulation unit
- 12: priority transmission mode setting unit

### BEST MODE FOR CARRYING OUT THE INVENTION

Hereinafter, embodiments of the present invention will be described in detail with reference to the accompanying drawings.

### (First Embodiment)

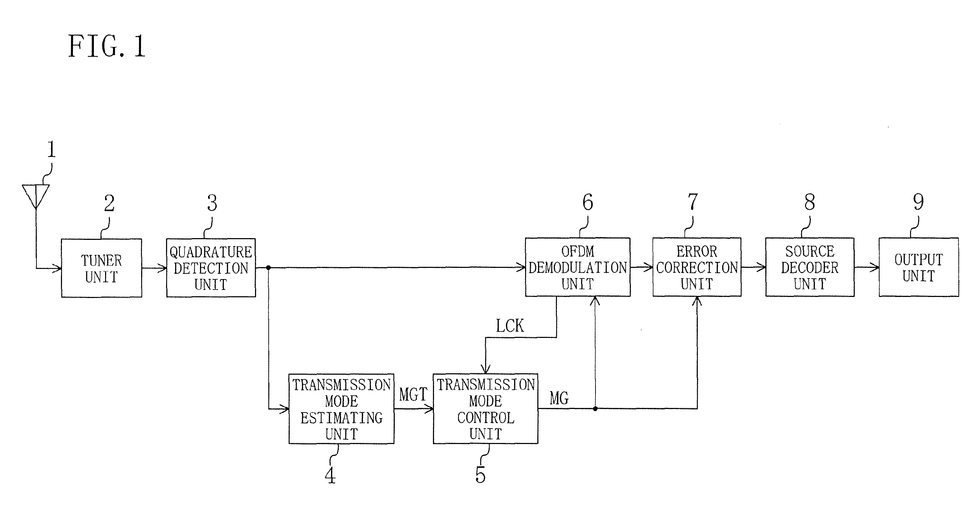

FIG. 1 is a block diagram showing an example configuration of a receiver according to a first embodiment of the present invention. The receiver of FIG. 1 has an antenna 1, a tuner unit 2, a quadrature detection unit 3, a transmission mode estimating unit 4, a transmission mode control unit 5, an OFDM demodulation unit 6, an error correction unit 7, a source decoder unit 8, and an output unit 9.

The antenna 1 receives OFDM signals of an RF (Radio Frequency) band and supplies the OFDM signals to the tuner unit 2. The tuner unit 2 selects an OFDM signal of a desired channel from the RF-band OFDM signals supplied from the antenna 1, frequency-converts the selected OFDM signal, and outputs the resultant OFDM signal of an IF (Intermediate Frequency) band to the quadrature detection unit 3. The quadrature detection unit 3 frequency-converts the IF-band OFDM signal into a base band, and outputs the resultant base-band OFDM signal to the transmission mode estimating unit 4 and the OFDM demodulation unit 6.

For a general OFDM signal, a signal of a final portion of an effective symbol period is duplicated and transmitted as a signal of a guard period before an effective symbol period.

For example, in digital terrestrial television broadcasting in Japan, three modes are defined as FFT modes and four values are defined as guard intervals. One of these FFT modes and one of these guard intervals are combined and used. Hereinafter, a combination of an FFT mode and a guard interval is also referred to as a transmission mode.

The transmission mode estimating unit 4 estimates an FFT mode and a guard interval from the base-band OFDM signal by a predetermined signal process, and outputs a combination of the estimated FFT mode and guard interval as a provisional transmission mode MGT to the transmission mode control unit 5. The FFT mode corresponds to the effective symbol length of the received OFDM signal.

As a method for estimating a transmission mode in the transmission mode estimating unit 4, a method based on a signal process as disclosed in, for example, Japanese Patent No. 2863747 or Japanese Unexamined Patent Application Publication No. 2005-198266, may be employed. These documents disclose a technique of estimating the transmission mode of a received OFDM signal based on the result of calculation of a correlation value between the received OFDM signal and a signal obtained by delaying the received OFDM signal by a predetermined effective symbol length.

The transmission mode control unit 5 controls a transmission mode MG based on values of the provisional transmission mode MGT and a synchronization establishment signal LCK output from the OFDM demodulation unit 6. The transmission mode control unit 5 outputs the transmission mode MG to the OFDM demodulation unit 6 and the error correction unit 7.

The OFDM demodulation unit 6 performs various demodulation processes, such as Fourier transform, synchronization signal recovery, equalization and the like with respect to the base-band OFDM signal output from the quadrature detection unit 3 in accordance with the transmission mode MG, and outputs the result as a demodulated signal to the error correction unit 7. The OFDM demodulation unit 6 also detects the establishment of synchronization and outputs the result of detection as the synchronization establishment signal LCK indicating the establishment of synchronization to the transmission mode control unit 5.

The error correction unit 7 performs various error correction processes, such as demapping, deinterleaving, Viterbi decoding, Reed-Solomon decoding and the like, with respect to the demodulated signal output from the OFDM demodulation unit 6 in accordance with the transmission mode MG, and outputs the result as a TS (Transport Stream) signal to the source decoder unit 8.

The source decoder unit 8 separates the TS signal supplied from the error correction unit 7 into a video stream, an audio stream, and further other data streams. When the streams are compressed by MPEG and the like, the source decoder unit 8 performs decompression processes corresponding to the compression techniques. The source decoder unit 8 outputs the resultant streams as a video signal, an audio signal, and other data to the output unit 9.

The output unit 9 has a display and a loudspeaker. The output unit 9 displays the video signal output from the source decoder unit 8 on the display, outputs the audio signal to the loudspeaker, and outputs the other data to an external apparatus, or performs any of these processes.

Operations of main portions of the receiver thus configured of FIG. 1 will be described. When this receiver is carried in a car or the like and the car is, for example, passing through a tunnel, a radio wave (received signal) which is received by an antenna may be blocked and a normal input to the receiver may be temporarily interrupted. An operation of the receiver in such a situation will be described, considering three states: (I) a state before interruption of the received signal; (II) a state during interruption of the received signal; and (III) a state where the signal is received again.

### (I) Before Interruption of Received Signal

When channel selection or powering ON is performed while the antenna 1 is receiving a signal, the tuner unit 2, the quadrature detection unit 3 and the transmission mode estimating unit 4 operate as described above, and the transmission mode estimating unit 4 outputs the provisional transmission mode MGT.

After channel selection or powering ON, if the synchronization signal LCK still indicates that synchronization establishment has not yet been achieved, the transmission mode control unit 5 outputs the value of the provisional transmission mode MGT as the transmission mode MG to the OFDM demodulation unit 6 and the error correction unit 7.

The OFDM demodulation unit 6 performs various demodulation processes, such as a synchronization process and the like, using the transmission mode MG, generates the synchronization establishment signal LCK indicating establishment of synchronization, and outputs the synchronization establishment signal LCK to the transmission mode control unit 5. For example, the OFDM demodulation unit 6 sets the synchronization establishment signal LCK=0 when synchronization has not been established, and the synchronization establishment signal LCK=1 when synchronization has been established. When the result of estimation of the transmission mode by the transmission mode estimating unit 4 is false, synchronization is not established, and when the estimation result is true, synchronization is often established. Note that the transmission mode estimating unit 4 may repeatedly estimate the provisional transmission mode MGT until synchronization is established.

Here, the synchronization establishment signal LCK may be a signal indicating a state of establishment of frame synchronization. For example, in the standard for digital terrestrial television broadcasting in Japan, a frame structure is employed in which a frame is composed of 204 OFDM symbols, and a frame synchronization signal is inserted over 16 symbols in a transmission signal. Moreover, values of the frame synchronization signal are alternated every frame. Therefore, when the OFDM demodulation unit 6 detects the frame synchronization signal and sets the synchronization establishment signal LCK=1, a transmission mode used by a demodulation process at that time is highly likely to be equal to the transmission mode of the received signal, i.e., the reliability of the synchronization establishment signal LCK is high.

When a time has passed since channel selection or powering ON and synchronization is established, the OFDM demodulation unit 6 switches the value of the synchronization establishment signal LCK from "0" to "1." When the value of the synchronization establishment signal LCK is switched to "1," the transmission mode control unit 5 holds the value of the transmission mode MG at that time, and outputs the held value as the transmission mode MG to the OFDM demodulation unit 6 and the error correction unit 7. The OFDM demodulation unit 6 and the error correction unit 7 performs various demodulation processes and error correction processes using the transmission mode MG.

### (II) During Interruption of Received Signal

Here, components that continue to perform operations similar to those of (I) will not be described. After the state of (I), when the antenna 1 cannot receive a signal, the OFDM demodulation unit 6 cannot obtain an appropriate input signal from the quadrature detection unit 3, and detects this state and sets the synchronization establishment signal LCK=0.

Even when the synchronization signal LCK is switched to "0," the transmission mode control unit 5 continues to output the held value of the transmission mode as the transmission mode MG to the OFDM demodulation unit 6 and the error correction unit 7. Therefore, in this state, the value of the transmission mode MG used in the OFDM demodulation unit 6 and the error correction unit 7 is equal to the value of the transmission mode when synchronization was established immediately before signal interruption. The OFDM demodulation unit 6 and the error correction unit 7 continues to perform various demodulation processes and error correction processes using the value of the transmission mode MG supplied from the transmission mode control unit 5.

### (III) State Where Signal Is Received Again

Here, components that continue to perform operations similar to those of (II) will not be described. Since the possibility that the FFT mode and guard interval of a received channel are changed when a signal of the channel is temporarily interrupted due to a tunnel, is considerably low, it may be considered that the transmission mode MG supplied from the transmission mode control unit 5 after (II) is equal to the transmission mode of the signal that is received again by the antenna 1. Therefore, immediately after the signal is received again by the antenna 1, the OFDM demodulation unit 6 and the error correction unit 7 can appropriately perform various demodulation processes and error correction processes.

As described above, in the receiver of FIG. 1, an FFT mode and a guard interval when synchronization of a received signal is established are held, and demodulation and error correction continue to be performed using the held FFT mode and the held guard interval. Therefore, even if inputting of a normal signal to the receiver is interrupted (e.g., reception of radio waves is blocked), then when the signal is received again, appropriate demodulation and error correction can be immediately performed without newly searching for an FFT mode and a guard interval based on the received signal. Therefore, it is possible to quickly resume reproduction of received data. Moreover, according to this receiver, it is not necessary to store an FFT mode, a guard interval and the like for each channel, leading to a simple structure. Thus, the desired object can be achieved with low cost.

### (Second Embodiment)

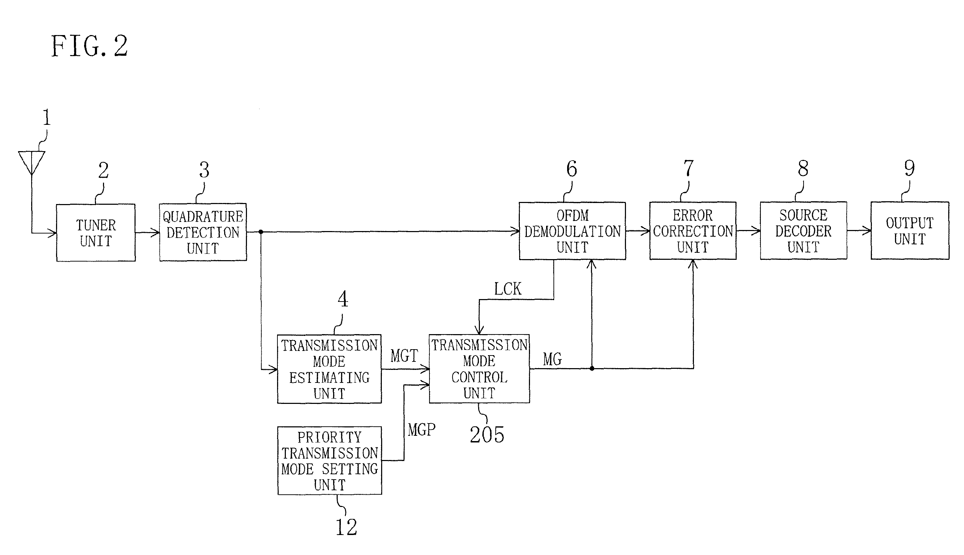

FIG. 2 is a block diagram showing an example configuration of a receiver according to a second embodiment of the present invention. The receiver of FIG. 2 is different from the receiver of FIG. 1 in that the receiver of FIG. 2 further has a priority transmission mode setting unit 12, and has a transmission mode control unit 205 instead of the transmission mode control unit 5. The other components are similar to those of the receiver of FIG. 1 and are indicated by the same reference numerals, and will not be described.

In the priority transmission mode setting unit 12, when the receiver searches for the transmission mode of a received signal, a transmission mode having a highest priority is previously set. The priority transmission mode setting unit 12 outputs the set transmission mode as a priority transmission mode MGP indicating a combination of an FFT mode and a guard interval that should be used with higher priority, to the transmission mode control unit 205. Note that the priority transmission mode MGP may be able to be arbitrarily changed in accordance with an instruction from a user or a CPU.

After channel selection or powering ON, the transmission mode control unit 205 initially selects the priority transmission mode MGP supplied from the priority transmission mode setting unit 12, and outputs the priority transmission mode MGP as the transmission mode MG to the OFDM demodulation unit 6 and the error correction unit 7. Thereafter, if the synchronization establishment signal LCK does not become "1" within a predetermined time, the transmission mode control unit 205 selects the provisional transmission mode MGT supplied from the transmission mode estimating unit 4, and supplies the provisional transmission mode MGT as the transmission mode MG to the OFDM demodulation unit 6 and the error correction unit 7. Moreover, thereafter, if the synchronization establishment signal LCK does not become "1" within a predetermined time, the transmission mode control unit 205 selects the priority transmission mode MGP supplied from the priority transmission mode setting unit 12 again.

Thereafter, the transmission mode control unit 205 repeatedly performs an operation of similarly alternately selecting the provisional transmission mode MGT and the priority transmission mode MGP until the synchronization establishment signal LCK becomes "1." When the value of the synchronization establishment signal LCK is switched to "1" during repetition of the operation of alternate selection, the transmission mode control unit 205 stores the value of the transmission mode MG at that time as a transmission mode MGM.

When inputting of a normal signal to the receiver is interrupted (e.g., radio waves received by an antenna are blocked), the OFDM demodulation unit 6 does not obtain an appropriate input signal from the quadrature detection unit 3, and detects this and sets the synchronization establishment signal LCK=0. If the provisional transmission mode MGT is selected as the transmission mode MG at the latest transition to "1" in the value of the synchronization establishment signal LCK, the transmission mode control unit 205 performs one operation. Alternatively, if the priority transmission mode MGP is selected as the transmission mode MG at the latest transition to "1" in the value of the synchronization establishment signal LCK, the transmission mode control unit 205 performs a different operation.

Specifically, if the provisional transmission mode MGT is selected as the transmission mode MG at the latest transition to "1" in the value of the synchronization establishment signal LCK, the transmission mode control unit 205 selects and outputs the held transmission mode MGM as the transmission mode MG for the first time after the synchronization establishment signal LCK becomes "0." Thereafter, when the synchronization establishment signal LCK does not become "1" within a predetermined time, the transmission mode control unit 205 outputs the provisional transmission mode MGT as the transmission mode MG. Thereafter, the transmission mode control unit 205 repeatedly performs an operation of alternately outputting the held transmission mode MGM and the provisional transmission mode MGT until the synchronization establishment signal LCK becomes "1."

On the other hand, if the priority transmission mode MGP is selected as the transmission mode MG at the latest transition to "1" in the value of the synchronization establishment signal LCK, the transmission mode control unit 205 selects and outputs the held transmission mode MGT as the transmission mode MG for the first time after the synchronization establishment signal LCK becomes "0." Thereafter, when the synchronization establishment signal LCK does not become "1" within a predetermined time, the transmission mode control unit 205 outputs the held transmission mode MGM as the transmission mode MG. Thereafter, the transmission mode control unit 205 repeatedly performs an operation of alternately outputting the provisional transmission mode MGT and the held transmission mode MGM until the synchronization establishment signal LCK becomes "1."

Thereafter, when a signal is input to the receiver again, then if the value of the transmission mode MG output by the transmission mode control unit 205 becomes equal to the transmission mode of the received signal, the synchronization establishment signal LCK becomes "1," so that appropriate OFDM demodulation and error correction are performed.

Note that, after the synchronization establishment signal LCK is changed from "1" to "0," the transmission mode control unit 205 may invariably first output the provisional transmission mode MGT as the transmission mode MG. In this case, when video or audio is interrupted since the received signal is switched to a different transmission mode (e.g., switching from Mode 3 to Mode 2), transmission mode estimation based on calculation in the transmission mode estimating unit 4 is started early, so that the interrupted video or audio reproduction can be quickly resumed.

As described above, the receiver of FIG. 2 has held a transmission mode as it was when synchronization was established, and after inputting of a normal signal to the receiver is interrupted (e.g., received radio waves are blocked), continues demodulation and error correction using a transmission mode that is alternately selected from a transmission mode estimated by the transmission mode estimating unit 4 and the held transmission mode. Therefore, when a normal signal is input to the receiver again, then even if the transmission mode of the received signal is different from a priority transmission mode previously set in the priority transmission mode setting unit 12, the probability that the transmission mode of the received signal is equal to the transmission mode of the transmission mode control unit 205 can be increased, so that appropriate demodulation, error correction and data reproduction can be early resumed using a simple configuration.

Although it has been described in the first and second embodiments that the transmission mode MG (i.e., both an FFT mode and a guard interval) is input to the OFDM demodulation unit 6 and the error correction unit 7, either an FFT mode or a guard interval that is required for each component may be supplied. In this case, only either a storing unit for holding an FFT mode or another storing unit for holding a guard interval may be employed, resulting in a decrease in apparatus cost.

Although it has also been described in the first and second embodiments above that, as a specific example of the transmission mode estimating unit 4, a transmission mode that is estimated based on a correlation between an OFDM signal and a signal obtained by delaying the OFDM signal is supplied as the provisional transmission mode MGT to the transmission mode control units 5 and 205, the method of estimating a transmission mode is not limited to this. The essential technical scope of the present invention is not limited by this estimation method.

For example, instead of obtaining a correlation between a received signal and a signal obtained by delaying the received signal to estimate a transmission mode, the transmission mode estimating unit 4 may store a table in which a plurality of combinations of an FFT mode and a guard interval are stored in predetermined order of priority, and may sequentially read out the combinations from the table until the synchronization establishment signal LCK indicates establishment of synchronization, and output the combinations thus read out to the transmission mode control units 5 and 205. In this case, it is not necessary to store, into the table, a plurality of combinations of an FFT mode and a guard interval for each channel. In the method of estimating a transmission mode using a correlation, although the accuracy of estimation may be deteriorated due to external disturbance, the influence can be eliminated by using the table, thereby making it possible to increase the accuracy of estimation of a transmission mode.

Although it has also been described in the first embodiment that a frame synchronization signal is detected, the OFDM demodulation unit 6 may detect establishment of other synchronizations, such as synchronization of an OFDM symbol or synchronization of a carrier frequency, and a synchronization establishment signal may indicate establishment of these synchronizations.

Although an apparatus for receiving digital terrestrial television broadcasting in Japan has also been described as an example in the first and second embodiments, the present invention can be similarly carried out in receivers for other wireless communication media, such as DVB (Digital Video Broadcasting)-T and DVB-H, which are standards for digital terrestrial television broadcasting in Europe, wireless LAN (Local Area Network) and the like, as long as they employ OFDM as a transmission scheme.

### INDUSTRIAL APPLICABILITY

As described above, the present invention, when a received signal is temporarily interrupted, can quickly resume reproduction of received data, and therefore, is useful for receivers or the like for receiving an OFDM signal wirelessly transmitted for digital terrestrial television broadcasting, wireless LAN and the like.

## Claims

1. A receiver for receiving an OFDM (Orthogonal Frequency Division Multiplexing) signal, comprising:
a demodulation unit configured to perform, on a received signal, demodulation and detection of establishment of synchronization in accordance with a transmission mode, the transmission mode being a combination of an FFT (Fast Fourier Transform) mode and a guard interval, and to output a synchronization establishment signal indicating an obtained result of the detection of establishment of synchronization; and
a transmission mode control unit configured to hold an FFT mode and a guard interval adopted when the synchronization establishment signal indicates establishment of synchronization, and to output a combination of the held FFT mode and the held guard interval, as the transmission mode to be used in the demodulation unit.

2. The receiver of claim 1, further comprising:
a transmission mode estimating unit configured to calculate a correlation between the received signal and a signal obtained by delaying the received signal by a predetermined time period, and to estimate an FFT mode and a guard interval of the received signal in accordance with the calculated correlation,
wherein the transmission mode control unit, after channel selection or powering ON, outputs a combination of the FFT mode and the guard interval estimated by the transmission mode estimating unit, as the transmission mode to be used in the demodulation unit, until the synchronization establishment signal indicates establishment of synchronization.

3. The receiver of claim 1, further comprising:
a transmission mode estimating unit configured to calculate a correlation between the received signal and a signal obtained by delaying the received signal by a predetermined time period, and to estimate an FFT mode and a guard interval of the received signal in accordance with the calculated correlation; and
a priority transmission mode setting unit configured to output a combination of an FFT mode and a guard interval to be used with higher priority,
wherein the transmission mode control unit, after channel selection or powering ON, outputs the combination of the FFT mode and the guard interval to be used with higher priority, as the transmission mode to be used in the demodulation unit, and until the synchronization establishment signal indicates establishment of synchronization, outputs one of the combination of the FFT mode and the guard interval estimated by the transmission mode estimating unit, and the combination of the FFT mode and the guard interval to be used with higher priority alternately each time a predetermined time period lapses, as the transmission mode to be used in the demodulation unit.

4. The receiver of claim 3, wherein
the transmission mode control unit, when the result of the detection of the synchronization does not indicate establishment of synchronization after once indicating establishment of synchronization, outputs one of the combination of the FFT mode and the guard interval estimated by the transmission mode estimating unit, and the combination of the held FFT mode and the held guard interval alternately each time a predetermined time period lapses, as the transmission mode to be used in the demodulation unit, until the synchronization establishment signal indicates establishment of synchronization.

5. The receiver of claim 1, wherein
the demodulation unit detects frame synchronization as the establishment of synchronization.

6. The receiver of claim 1, further comprising:
a transmission mode estimating unit configured to sequentially read out a plurality of combinations of an FFT mode and a guard interval from a table storing the plurality of combinations in predetermined order of priority and to output the read combinations until the synchronization establishment signal indicates establishment of synchronization,
wherein the transmission mode control unit, after channel selection or powering ON, outputs the combinations of an FFT mode and a guard interval output from the transmission mode estimating unit, as the transmission mode to be used in the demodulation unit, until the synchronization establishment signal indicates establishment of synchronization.

7. A receiving method for receiving an OFDM signal, comprising:
a demodulation step of performing, on a received signal, demodulation and detection of establishment of synchronization in accordance with a transmission mode, the transmission mode being a combination of an FFT mode and a guard interval, and generating a synchronization establishment signal indicating an obtained result of the detection of establishment of synchronization; and
a transmission mode control step of holding an FFT mode and a guard interval adopted when the synchronization establishment signal indicates establishment of synchronization, and determining a combination of the held FFT mode and the held guard interval, as the transmission mode to be used in the demodulation step.

8. The receiving method of claim 7, further comprising:
a transmission mode estimating step of calculating a correlation between the received signal and a signal obtained by delaying the received signal by a predetermined time period, and estimating an FFT mode and a guard interval of the received signal in accordance with the calculated correlation,
wherein the transmission mode control step, after channel selection or powering ON, determines a combination of the FFT mode and the guard interval estimated by the transmission mode estimating step, as the transmission mode to be used in the demodulation step, until the synchronization establishment signal indicates establishment of synchronization.
